# EUROPEAN PATENT APPLICATION

(11) **EP 1 174 779 A1**
(43) Date of publication of application: **23.01.2002**
(21) Application number: 00917450.9
(22) Date of filing: 24.04.2000
(51) Int. Cl.: G05B 19/02

(54) **METHOD OF PROGRAMMING MOTION CONTROLLER**

(30) Priority: 28.04.1999 JP 12144299
(71) Applicant: KABUSHIKI KAISHA YASKAWA DENKI, Kitakyushu-Shi, Fukuoka 806-0004 (JP)
(72) Inventor: OHBA, Katsuo Kabushiki Kaisha Yaskawa Denki, Kitakyushu-shi Fukuoka 806-0004 (JP)
(74) Representative: Goddar, Heinz J., Dr.
(86) International application number: JP0002690
(87) International publication number: WO0067083

(57) **Abstract**

A method of programming a motion controller is provided in which a motion program and a sequence program for a motion controller of an industrial machine are independently described using programming devices, loaded into the motion controller, and executed. A function command (3) allows the motion program (2) to directly execute a sequence subprogram (4) described in a sequence control language.

## Description

### Technical Field

The present invention relates to a method of programming a motion controller for controlling an industrial machine.

### Background Art

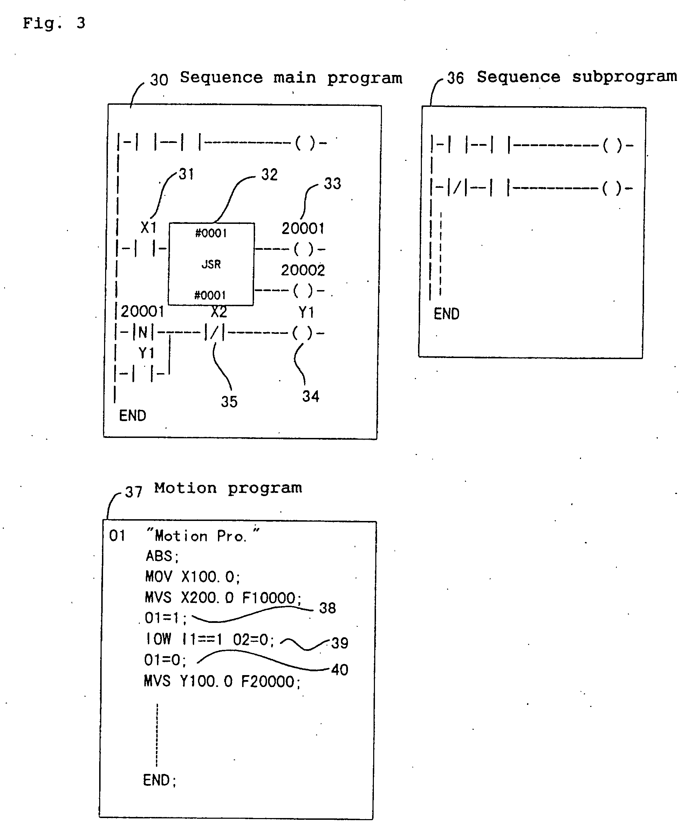

An example of a conventional method is explained with reference to the drawings. Fig. 3 is a diagram for explaining the conventional concept. In the figure, the numerical reference 30 denotes a sequence program (hereinafter, referred to as a main program), 36 denotes a sequence subprogram (hereinafter, referred to as a subprogram), and 37 denotes a motion program 37. Conventionally, in a case where the subprogram 36 described in a sequence language is executed from the motion program 37, a call command 32 for the subprogram 36 is described in the main program 30, and a start input 31 thereof is allocated to a register X1 linked with the motion program 37, and then, an output command 38 for turning the start input 31 on is described in the motion program 37. Furthermore, if it is required to confirm a completion of execution of the subprogram 36 in order to advance the motion program 37 to the next step, a circuit, which receives an operation completion output 33 of the call command 32 for the subprogram 36 and sets the output to a register (Y1) 34 linked to the motion program 37, is provided for the main program 30, and a command 39 for receiving the output is described in the motion program 37. The latter half "O2=0" of this command is linked to a self-holding reset relay (X2) 35 of the main program to turn this relay on, and an output command 40 of the motion program 40 is for turning the start input 31 of the subprogram off.

Thus, in a case where the subprogram 36 is executed in the motion program 37, a call command for the subprogram 36 is described in the main program 30, and input/output signals of the command are linked to motion input/output commands, and a start, stop, and confirmation of completion are executed by turning these signals on/off.

However, in the abovementioned conventional example, complex programs for generating and receiving signals are required in the main program and motion program, and the main program and motion program are not simultaneous and not sequential, so that extra time is required for signal generation and receiving and on/off detection, and the whole motion control cycle time is delayed.

Therefore, the object of the invention is to provide a programming method, wherein, when a sequence subprogram is executed from a motion program, a subprogram call circuit and a signal generating and receiving circuit for the motion program are eliminated from the main program to simplify the main program. the subprogram is executed by only the motion program, whereby the whole program for motion control is simplified and increased in recognition, and the total cycle time is shortened.

### Disclosure of Invention

In order to solve the abovementioned problems , the present invention provides a method of programming a motion controller in which a motion program and a sequence program of the motion controller for controlling an industrial machine are independently described by using programming devices, and the programs are separately loaded into the motion controller and executed, wherein
said method comprises a function command for executing a sequence subprogram described in a sequence control language from the motion program, whereby the sequence subprogram is directly executed in response to the function command.

### Brief Description of the Drawings

Fig. 1 is a conceptual block diagram showing an embodiment of the invention;
Fig. 2 is a conceptual diagram showing a flow of program creation using programming devices; and
Fig. 3 is a conceptual block diagram of the conventional example.

### Best Mode for Carrying out the Invention

Hereinafter, an embodiment of the invention is explained with reference to the drawings.

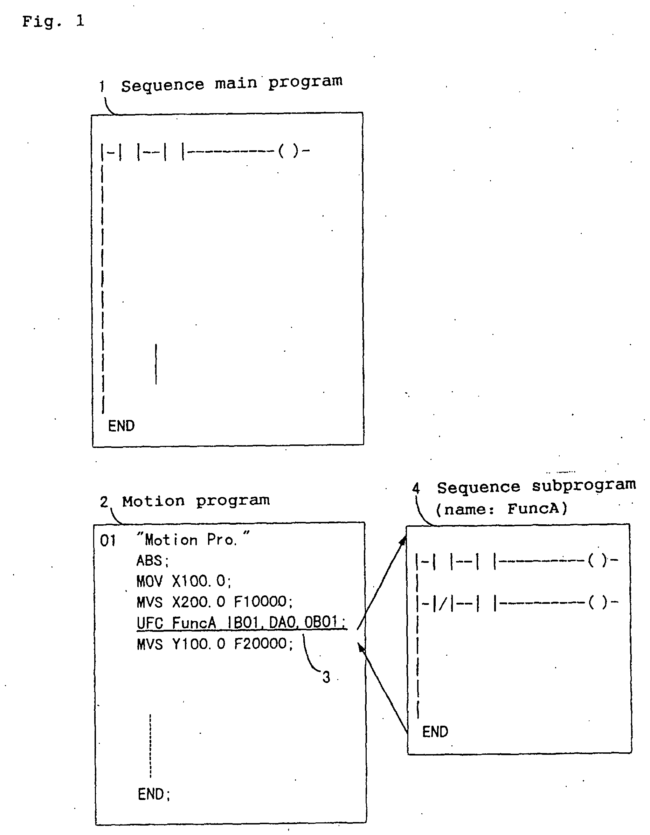

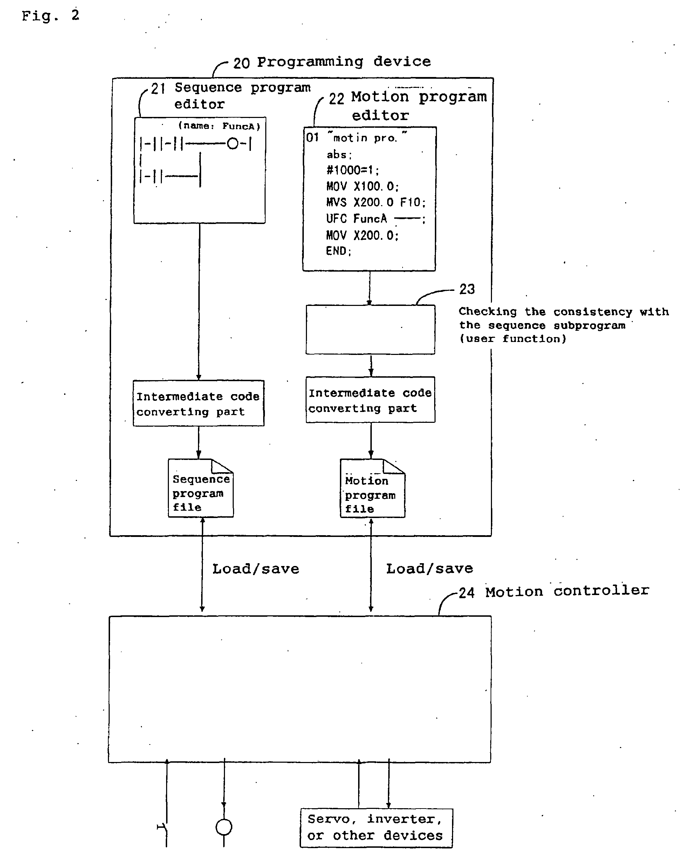

Fig. 1 is a conceptual block diagram showing the relationship between the main program, motion program, and subprogram, and Fig. 2 is a conceptual diagram showing a flow of program creation using programming devices.

In Fig. 1, the numerical reference 1 denotes a main program, 2 denotes a motion program, 3 denotes a function command for executing a subprogram, and 4 denotes the subprogram. In Fig. 2, the numerical reference 20 denotes programming devices, 21 denotes a sequence program editor, 22 denotes a motion program editor, 23 denotes a portion for checking consistency between the motion program and sequence subprogram, and 24 denotes a motion controller. First, as shown in Fig. 1, differently from the conventional example, a call command for the subprogram 4 and a signal generating/receiving circuit for the motion program 2 are not required in the main program 1 in the present invention, and to execute the subprogram 4 from the motion program 2, the function command 3 for directly executing the subprogram 4 is described in the motion program 2. In this function command 3, the name "FuncA" of the subprogram 4, input register number "IB01", work offset address "DA0", and output register number "OB01" are parametrically described in order, and an interface with the subprogram 4 is specified. The subprogram 4 is created separately from the motion program 2 as in the conventional example. These programs are created as shown in Fig. 2, wherein the main program 1 and subprogram 4 are created by the sequence program editor 21, converted into intermediate codes, and then saved as motion program files. The motion program 2 is created by the motion editor 22, and in a case where a function command for executing the sequence subprogram is described, the motion program 2 is passed through the consistency check portion 23 to detect the existence of interface errors. When there is no errors, the program is converted into an intermediate code and saved as a motion program file. Thereafter, these files are loaded into the motion controller 24. After loading into the controller, if the motion program 2 is executed, the subprogram can be directly executed from the motion program.

Thereby, when the sequence subprogram is executed from the motion program, passing through the main program is not required, so that the whole program for motion control is simplified and the total cycle time is shortened.

As described above, according to the invention, while the motion program and sequence program are described in separate languages making the most of the respective advantages of each language, the whole program for a motion controller is simplified and increased in recognition, and at the same time, the cycle time is shortened and overall performance of the motion controller is improved.

### Industrial Applicability

According to the invention, since a motion program for a motion controller for controlling an industrial machine is simplified, it becomes possible to control an industrial machine using a high performance motion controller.

## Claims

1. A method of programming a motion controller in which a motion program and a sequence program for a motion controller for controlling an industrial machine are independently described by using programming devices, and separately loaded into the motion controller and executed, wherein
said programming method comprises a function command for executing a sequence subprogram described in a sequence control language from the motion program, and in response to the function command, the sequence subprogram is directly executed.

2. A method of programming a motion controller according to Claim 1, wherein parameter consistency is checked between the motion program and sequence subprogram that are independently described by the programming devices.
